# EUROPÄISCHE PATENTSCHRIFT

(11) **EP 1 628 791 B1**
(45) Veröffentlichungstag und Bekanntmachung des Hinweises auf die Patenterteilung: **07.01.2015**
(21) Anmeldenummer: 04739430.9
(22) Anmeldetag: 28.05.2004
(51) Int. Cl.: B21J 13/10, B25J 19/00, B25J 19/06

(54) **HANDHABUNGSGERÄT ZUM HANDHABEN EINES WERKSTÜCKS WÄHREND EINES UMFORMPROZESSES**
DEVICE FOR HANDLING A WORKPIECE DURING A SHAPING PROCESS
MANIPULATEUR SERVANT A MANIPULER UNE PIECE PENDANT UN PROCESSUS DE FORMAGE

(30) Priorität: 05.06.2003 DE 10325902; 31.03.2004 DE 102004015675
(43) Veröffentlichungstag der Anmeldung: 01.03.2006
(73) Patentinhaber: LANGENSTEIN & SCHEMANN GMBH, D-96450 Coburg (DE)
(72) Erfinder: REISSENWEBER, Frank, 96145 Sesslach (DE)
(74) Vertreter: Meissner, Bolte & Partner GbR
(86) Internationale Anmeldenummer: PCT/EP2004/005780
(87) Internationale Veröffentlichungsnummer: WO 2004/108322

(56) Entgegenhaltungen:
- DE-A- 4 220 796
- DE-A- 10 060 709
- PATENT ABSTRACTS OF JAPAN Bd. 1996, Nr. 08, 30. August 1996 (1996-08-30) & JP 8 090133 A (MEIDENSHA CORP), 9. April 1996 (1996-04-09)

## Beschreibung

Die Erfindung betrifft ein Handhabungsgerät zum Handhaben eines Werkstücks während eines Umformprozesses.

Die DE 42 20 796 A1 offenbart ein Handhabungsgerät zum Halten eines Schmiedeteils beim Schmiedevorgang, bei dem ein Fahrwerk über eine Manschette eine Greifereinrichtung trägt, die eine das Schmiedeteil beim Schmiedevorgang erfassende Klemmzange aufweist. Die Manschette weist eine Hydraulikkammer auf und ist durch Verändern des Innendrucks in der Hydraulikkammer über ein Steuerventil wahlweise in einen nachgiebigen Zustand und einen starren Zustand bringbar. Der Greifereinrichtung kann ein Drehantrieb für die Klemmzange zugeordnet sein, wobei der Drehantrieb, von der Klemmzange hergesehen, jenseits der Manschette angeordnet ist oder auf der der Greifereinrichtung zugeordneten Seite der Manschette vorgesehen ist, d. h. von der Manschette mitgetragen wird.

Aus DE 100 60 709 A1, auf der der Oberbegriff des Anspruchs 1 basiert, ist ein weiteres Handhabungsgerät zum Handhaben eines Schmiedeteiles beim Schmiedevorgang bekannt, bei dem ein länglicher Greifer einerends an einer Trägereinrichtung gelagert ist und anderenends eine Greifeinrichtung mit einer Klemmzange, zwischen deren zwei Zangenbacken das Schmiedeteil oder Werkstück gehalten werden kann, aufweist. Ein eine der Zangenbacken tragender Zangenhebel der Klemmzange ist ortsfest in Längsrichtung des Greifers verlaufend angeordnet, während ein die andere Zangenbacke tragender Zangenhebel mittels einer Zangenbetätigungseinrichtung durch Schwenken von einer geöffneten Stellung in eine geschlossene Stellung gebracht werden kann, um das Werkstück zwischen den Zangenbacken einzuklemmen, oder umgekehrt von der geschlossenen Stellung in die geöffnete Stellung zum Freigeben des Werkstücks. An die Klemmzange schließt sich ein Greiferarm des Greifers an und an diesen Greiferarm ein Blöckstück aus einem elastisch verformbaren Material. Das nachgiebige oder flexible Blockstück ist an seiner vom Greiferarm abgewandten Seite mit einem Armbereich verbunden, der sich mittels eines ersten Elektromotors auf und ab drehschwenken lässt und mittels eines zweiten Elektromotors heben und senken lässt. Diese Bewegungen werden synchronisiert von einer Steuereinrichtung. Das Handhabungsgerät kann als Manipulator oder als Roboter ausgebildet sein.

Durch die Flexibilität des Blockstücks ist der den Greiferarm, die Klemmzange und die Zangenbetätigungseinrichtung umfassende vordere Bereich dieses bekannten Greifers gegenüber dem hinteren Bereich mit dem Armbereich und den Antriebsmotoren flexibel oder schwenkbar, wobei das Blockstück als eine Art Gelenk oder Schwenklager dient. Wenn nun der Greifer ein Schmiedewerkstück auf ein Gesenk eines Schmiedehammers legt und der Schlagbär auf das Werkstück schlägt, können dadurch erzeugte Vibrationen oder Stöße, die sich auf die Klemmzange und den Greifer übertragen, in dem elastischen Blockstück gedämpft und abgefangen werden, so dass die Antriebe entlastet werden. Dies ermöglicht eine Automatisierung des Schmiedeprozesses, der in der Praxis immer noch von Menschen durchgeführt wird, die das Werkstück in den Schmiedehammer halten.

Bei diesem aus DE 100 60 709 A1 bekannten Handhabungsgerät ist ferner zum Handhaben des Werkstücks vor oder nach dem eigentlichen Umformvorgang im Schmiedehammer, insbesondere zur Bewegung zum Schmiedehammer hin oder vom Schmiedehammer weg, eine Starrstellstange vorgesehen, die das elastische Blockstück überbrückt und eine starre Verbindung zwischen dem Greiferarm und dem Armbereich an den beiden voneinander angewandten Seiten des Blockstücks herstellt. Die Starrstellstange weist einen Zapfen auf, der in eine Höhlung des Greiferarms von unten eingreift. Wenn die Starrstellstange im Eingriff zum Greiferarm ist, sind der Armbereich und der Greiferarm entlang der Längsrichtung des Greifers koaxial zueinander ausgerichtet. Durch das Eigengewicht der vorderen Teile, insbesondere der Klemmzange, der Zangenbetätigungseinrichtung und des Greiferarms, wird die Starrstellstange in ihrer Stellung gehalten und eine im Wesentlichen horizontale starre Lage des gesamten Greifers während eines Transports des ergriffenen Werkstücks gewährleistet.

Zum Lösen dieser Starrstellung wird beim Auflegen des Werkstücks auf das Gesenk des Schmiedehammers der hintere Armbereich nach oben angehoben, so dass er unter einem Winkel zur Längsrichtung des vorderen Greiferbereichs mit der Klemmzange gerichtet ist und sich das Blockstück entsprechend verformt oder verbiegt. Dadurch wird die Fixierung der Starrstellstange am Greiferarm gelöst, da der Zapfen aus der Höhlung herausgeschwenkt wird und die Starrstellstange dann nicht mehr mit dem vorderen Greiferarm verbunden ist. Bei gelöster Starrstellstange kann nun das Blockstück seine Funktion als Dämpfungselement für die Schlagstöße und Vibrationen infolge seiner Nachgiebigkeit erfüllen. Um den Greifer wieder starr zu stellen, wird einfach der hintere Armbereich wieder nach unten gesenkt in eine koaxiale Lage zum vorderen Arm und die Starrstellstange wieder am vorderen Greiferarm fixiert, indem der Zapfen wieder in die Höhlung eingreift.

Die Bewegung dieses bekannten Handhabungsroboters gemäß DE 100 60 709 A1 setzt sich im Wesentlichen aus einer horizontalen und vertikalen Bewegung mittels des zweiten Elektromotors zusammen. Die Schwenkbewegung mittels des ersten Motors vor dem eigentlichen Schmiedevorgang bei aufliegendem Werkstück dient nur zur Lösung bzw. Fixierung der Starrstellstange. Das Werkstück wird somit immer in einer Lage gehalten, in der seine Ober- und Unterseite immer horizontal verlaufen, und nur translatorisch horizontal oder vertikal bewegt. Eine Drehung des Werkstücks ist nicht beschrieben.

Aus JP 08090133 A und zugehörigem Patent Abstracts of Japan, Band 1996, Nr. 08, 30. August 1996 ist ein Manipulatorgreifer zum Schmieden bekannt mit einem Greiferkörper, in dem eine von einem Motor drehbare Drehwelle gelagert ist, die ein topfförmiges Drehelement antreibt. Der Greiferkörper ist über ein Gelenk mit einem Manipulatorarm verbunden. Über zwei von Druck-Schraubenfedern umgebene Führungsstangen ist ein Träger eines Greifers mit zwei Greifelementen zum Halten eines Schmiedeteils an dem Drehelement gelagert. An dem Drehelement ist ferner ein Hubzylinder befestigt, der eine Scheibe in eine Ausnehmung des Trägers hineindrückt oder aus dieser herausbewegt, wobei bei Eingriff der Scheibe in die Ausnehmung eine starre Verbindung zwischen dem Drehelement und dem Träger hergestellt wird und bei Herausbewegung der Scheibe aus der Ausnehmung durch den Hubzylinder eine axiale Federung des Trägers gegenüber dem Drehelement über die Druck-Schraubenfedern und damit ein Abfedern des Schmiedeschlags bewirkt ist.

Der Erfindung liegt nun die Aufgabe zugrunde, komplexere Bewegungen des Werkstückes beim Umformprozess, insbesondere vor einem Umformschritt oder zwischen zwei Umformschritten, zu ermöglichen. Insbesondere soll eine Drehung des Werkstücks ermöglicht werden. Außerdem soll vorzugsweise das aus DE 100 60 709 A1 bekannte Handhabungsgerät entsprechend weiterentwickelt werden.

Diese Aufgabe wird gemäß der Erfindung gelöst mit den Merkmalen des Anspruches 1.

Das Handhabungsgerät zum Handhaben eines Werkstücks während eines Umformprozesses, insbesondere eines Schmiedeprozesses, umfasst
a) wenigstens eine Greifeinrichtung mit wenigstens zwei relativ zueinander bewegbaren Greifelementen zum Greifen des Werkstücks,
b) wenigstens eine Transporteinrichtung (oder: Bewegungseinrichtung) zum Transportieren (oder: Bewegen) der Greifeinrichtung oder wenigstens einer Trägereinrichtung, an der die Greifeinrichtung befestigt oder befestigbar ist,
c) wenigstens einen Rotationsantrieb zum Drehen der Greifeinrichtung um eine durch die Greifeinrichtung verlaufende Drehachse und/oder zum Drehen wenigstens eines der Greifelemente um eine durch das Greifelement verlaufende Drehachse,
d) wobei die Greifeinrichtung oder die wenigstens eine Trägereinrichtung, an der die Greifeinrichtung befestigt oder befestigbar ist, einerseits und die Transporteinrichtung andererseits in einem flexiblen Zustand miteinander flexibel verbunden sind und in einem starren Zustand, zumindest in einer Raumrichtung und/oder in jeder Drehstellung der Greifeinrichtung und/oder des oder der Greifelemente, im Wesentlichen miteinander starr verbunden sind oder zueinander starr gestellt sind.

Die gemäß der Erfindung vorgesehene Dreh- oder Schwenkbarkeit der Greifmittel, nämlich der Greifeinrichtung insgesamt und/oder der Greifelemente, ermöglicht eine Handhabung der ergriffenen Werkstücke mit größeren Freiheitsgraden, insbesondere ein Drehen oder Schwenken der ergriffenen Werkstücke, vorzugsweise um deren eigene oder durch die Werkstücke verlaufende Drehachsen, beispielsweise zur Materialvorverteilung beim Schmieden. Die flexible Verbindung von Greifeinrichtung und/oder Trägereinrichtung und Transporteinrichtung im flexiblen Zustand zeitigt die zumindest teilweise Absorption oder Dämpfung von Stößen oder Schwingungen, die beim Umformvorgang vom Werkstück in der Umformmaschine auf die Greifeinrichtung übertragen werden, und damit den Schutz der Transporteinrichtung vor diesen mechanischen Belastungen. Die starre Verbindung oder Stellung von Greifeinrichtung und/oder Trägereinrichtung und Transporteinrichtung im starren Zustand wird dagegen beim Handhaben des Werkstücks beim Transport oder beim Drehen oder Schwenken vor oder nach Umformschritten eingesetzt.

Zur Realisierung des flexiblen Zustandes und des starren Zustandes ist nun gemäß der Erfindung ferner wenigstens ein flexibles Element zwischen Greifeinrichtung und/oder Trägereinrichtung und Transporteinrichtung vorgesehen, im Allgemeinen ein (dauerhaft) elastisches Element, über das Greifeinrichtung und/oder Trägereinrichtung und Transporteinrichtung in dem flexiblen Zustand praktisch ausschließlich miteinander verbunden sind. In dem starren Zustand ist oder wird das flexible Elements über wenigstens eine Stützeinrichtung überbrückt (oder: ein Bypass hergestellt), die Greifeinrichtung und/oder Trägereinrichtung und Transporteinrichtung im Wesentlichen aneinander oder gegeneinander abstützt und dadurch deren gewünschte Starrstellung herbeiführt. Für diese Ausführungsform kann beispielsweise eine Starrstellungseinrichtung nach Art der eingangs genanten DE 100 60 709 *<A1* verwendet werden.

Gemäß der Erfindung sind oder ist schließlich außerdem die Greifeinrichtung und/oder Trägereinrichtung im gestützten Zustand in einem Stützlager der Stützeinrichtung abgestützt, wobei dieses Stützlager der Stützeinrichtung ein Drehlager für die Greifeinrichtung und/oder Trägereinrichtung bildet, in dem die Greifeinrichtung und/oder Trägereinrichtung beim Drehen der Greifeinrichtung sich dreht oder drehbar ist. Die Greifeinrichtung ist dadurch auf einfache Weise auch im gestützten Zustand frei drehbar.

Vorteilhafte Ausgestaltungen und Weiterbildungen des Handhabungsgerätes sowie ein Verfahren zum Umformen eines Werkstücks unter Verwendung eines Handhabungsgerät gemäß der Erfindung ergeben sich aus den vom Anspruch 1 abhängigen Ansprüchen.

Im Allgemeinen umfasst der oder jeder Rotationsantrieb wenigstens einen elektrischen Antriebsmotor. Der Antriebsmotor ist vorzugsweise ein Servomotor oder ein ähnlich kontinuierlich ansteuerbarer Motor zum Einstellen jeder beliebigen Winkel(zwischen)position. Dadurch ist die Drehwinkelposition jederzeit bekannt und es kann während eines translatorischen Bewegens des Handhabungsgerätes dieses gleichzeitig gedreht werden und die Handhabungsgeschwindigkeit erhöht werden. Andernfalls wird eine Drehwinkeloder Anschlagserfassungseinrichtung vorgesehen, die einen Anschlag an der vorgesehenen Drehwinkel(end)position erfasst und an die Steuerung des Handhabungsgerätes weitergibt. Dies ist besonders vorteilhaft bei Vorsehen eines pneumatischen oder hydraulischen Rotationsantriebs.

Der oder die Rotationsantrieb(e) zum Drehen der Greifeinrichtung insgesamt ist bzw. sind in einer besonders vorteilhaften Ausführungsform auf der von der Greifeinrichtung und/oder der Trägereinrichtung abgewandten Seite des flexiblen Elements angeordnet, insbesondere zwischen dem flexiblen Element und der Transporteinrichtung. Diese Ausführungsform entkoppelt auch den Rotationsantrieb von den Umformschlägen. Es wird dann vorzugsweise das flexible Element auch zum Übertragen des Drehmoments des Rotationsantriebs zur Greifeinrichtung hin eingesetzt, also praktisch als Drehkupplung. Dazu kann eine Abtriebswelle des Antriebsmotors über einen Flansch mit dem flexiblen Element drehfest verbunden sein. Alternativ kann aber auch eine flexible Welle zum Übertragen der Drehung vom Rotationsantrieb zur Greifeinrichtung vorgesehen sein.

Ferner kann in einer alternativen Ausführungsform der Rotationsantrieb zum Drehen der Greifeinrichtung auch auf der von der Transporteinrichtung abgewandten Seite des flexiblen Elements, also auf derselben Seite wie die Greifeinrichtung und/oder deren Trägereinrichtung, angeordnet sein, insbesondere zwischen flexiblem Element und Greifeinrichtung und/oder Trägereinrichtung.

Die Trägereinrichtung ist in der Regel als mit der Greifeinrichtung beim Drehen der Greifeinrichtung mitrotierend ausgebildet, also drehfest mit der Greifeinrichtung verbunden.

Das Stützlager und die Greifeinrichtung und/oder Trägereinrichtung weisen insbesondere im Wesentlichen zylindrische Kontakt- oder Lagerflächen auf. Die Trägereinrichtung weist vorzugsweise eine Trägerwelle auf, die in der Stützeinrichtung, insbesondere im Stützlager, abstützbar ist.

In einer besonderen Ausführungsform ist wenigstens eine Verriegelungseinrichtung vorgesehen, die in dem starren Zustand die wenigstens eine Stützeinrichtung mit der Greifeinrichtung oder der Trägereinrichtung und/oder der Transporteinrichtung verriegelt (oder: koppelt) und in dem flexiblen Zustand wieder frei gibt oder nicht verriegelt. Die Verriegelungseinrichtung ist vorzugsweise am Stützlager der Stützeinrichtung angeordnet und bildet vorzugsweise zusammen mit dem Stützlager eine umlaufende Begtenzungs- und/oder Lagereinrichtung für die Greifeinrichtung oder die Trägereinrichtung, so dass diese auch bei einer Drehung um 360° nicht herausfallen kann.

Die Greifeinrichtung weist im Allgemeinen eine Betätigungseinrichtung zum Bewegen der Greifelemente zueinander auf. Die Betätigungseinrichtung ist insbesondere in oder an einem Trageteil der Trägereinrichtung gelagert, das vorzugsweise zwischen der Trägerwelle und dem flexiblem Element angeordnet ist. Ferner weist die Greifeinrichtung in einer bevorzugten Ausbildung, beispielsweise nach Art einer Zange, wenigstens zwei in einem Schwenklager zueinander verschwenkbare Greifhebel auf, von denen jeder wenigstens ein Greifelement trägt. Einer der beiden Greifhebel ist nun vorzugsweise unmittelbar mit der Trägereinrichtung verbunden und der andere Greifhebel mit der Betätigungseinrichtung gekoppelt. Die Betätigungseinrichtung schwenkt den zweiten Greifhebel gegenüber dem ersten Greifhebel in dem Schwenklager.

Die Stützeinrichtung ist vorzugsweise an der Transporteinrichtung und/oder am Antriebsgehäuse des Rotationsantriebs befestigt.

Die Greifelemente der Greifeinrichtung sind im Allgemeinen passiv drehbar gelagert, insbesondere selbsteinstellend, wobei Anschläge zur Begrenzung der Schwenkbewegung vorgesehen sein können. Durch die Schwenkung der Greifbacken kann ein Verdrehen, Verformen oder Verspringen der Enden des Werkstücks beim Umformen, insbesondere beim Biegen, wenigstens teilweise kompensiert werden. Auch zum Drehen der Greifelemente der Greifeinrichtung um jeweils eine zugehörige Drehachse kann in einer besonderen Ausführungsform wenigstens ein oder jeweils ein Rotationsantrieb vorgesehen sein..

Die Drehbewegung der Greifeinrichtung und/oder des oder der Greifelemente ist in einer Ausführungsform auf einen vorgegebenen Winkelbereich beschränkt, insbesondere durch entsprechende Begrenzungsmittel, Anschläge oder dergleichen oder die Ansteuerung der Antriebe. Dieser vorgegebene Winkelbereich liegt im Allgemeinen bei wenigstens 90°, insbesondere 45° nach beiden Seiten von einer Ausgangslage, und vorzugsweise bei wenigstens 180°, insbesondere 90° nach beiden Seiten von einer Ausgangslage.

Es ist aber auch eine volle Rotation möglich, beispielsweise um 360° oder sogar mehrere oder beliebig viele Umläufe. Diese Ausführungsform wird vorzugsweise kombiniert mit der Ausführungsform einer Verschließeinrichtung für die Stützeinrichtung, so dass die Trägereinrichtung oder die Greifeinrichtung während der vollen Rotation unterstützt oder umschlossen bleiben und nicht herausfallen kann bzw. können.

Die Drehbarkeit der Greifmittel (Greifeinrichtung und/oder Greifelemente) im Handhabungsgerät gemäß der Erfindung ermöglicht nun die Automatisierung eines Verfahren zum Umformen eines Werkstücks, bei dem das Werkstück in einem Prozessschtitt gedreht werden muss, beispielsweise bei Kombination eines Biegeschritts mit einem eigentlichen Schmiedeschritt, Plätten, beim Vor- und Fertigschmieden und/oder beim Schmieden in verschiedenen Gravuren.

Das Umformverfahren gemäß der Erfindung umfasst die Verfahrensschritte
a) Bereitstellen wenigstens eines Werkstücks,
b) Greifen des Werkstücks, Transport des Werkstücks zu einer Umformmaschine sowie Positionieren des Werkstücks in eine vorgegebene Umformposition (in der Umformmaschine) mittels wenigstens eines Handhabungsgeräts gemäß der Erfindung,
c) Umformen des Werkstücks in wenigstens einem Umformschritt in der Umformmaschine,
d) Drehen oder Schwenken des Werkstücks vor oder nach einem Umformschritt oder zwischen zwei Umformschritten mittels des Handhabungsgeräts durch Drehen von dessen Greifeinrichtung und/oder dessen Greifelement(en),
   vorzugsweise auch den weiteren Verfahrenschritt
e) Transport des umgeformten Werkstücks mittels des wenigstens einen Handhabungsgeräts zu einer Werkstückablage (oder: Aufnahmebereich für die umgeformten Werktücke).

Für die Dreh- oder Schwenkbewegung des Werkstücks wird in vielen Fällen ein Schwenkwinkel von wenigstens 90°, insbesondere wenigstens 180° oder wenigstens 360°, gewählt und/oder eine stufenlose oder quasi stufenlose Drehung und/oder eine Einstellung in praktisch jeder beliebigen Drehstellung. Ein Dreh- oder Schwenkwinkel von etwa 90° wird oft gewählt, um das Werkstück in einer Richtung biegen und in einer dazu orthogonalen Richtung in seinem Querschnitt verändern zu können und/oder eine Materialvorverteilung zur besseren Anpassung an eine Schmiedegravur zu erreichen.

In einer besonders vorteilhaften Ausführungsform wird das Werkstück während des Umformens oder des Umformschritts von dem wenigstens einen Handhabungsgerät gemäß der Erfindung festgehalten, vorzugsweise von wenigstens zwei Handhabungsgeräten gemäß der Erfindung an verschiedenen Enden. Damit kann ein Prellen des Werkstücks beim Auftreffen des Umformwerkzeugs vermieden werden und das Werkstück in seiner Umformposition gehalten werden.

Eine bevorzugte Anwendung findet das Handhabungsgerät in einem Umformverfahren mit einem Schmiedehammer oder einer Spindelpresse als Umformmaschine, auch wenn natürlich auch andere Umformmaschinen möglich sind wie beispielsweise hydraulische Pressen.

Die Erfindung wird im folgenden anhand von Ausführungsbeispielen weiter erläutert. Dabei wird auf die Zeichnung Bezug genommen, in deren
- FIG 1: ein Handhabungsgerät mit geöffneter Greifeinrichtung vor dem Ergreifen eines Werkstücks in einer Seitenansicht,
- FIG 2: das Handhabungsgerät gemäß FIG 1 mit in der geschlossenen Greifeinrichtung ergriffenem und in eine Umformmaschine gelegten Werkstück in einer Seitenansicht,
- FIG 3: ein Querschnitt durch das Handhabungsgerät gemäß FIG 1 in der mit III-III bezeichneten Schnittebene,
- FIG 4: ein Schnitt gemäß FIG 3 mit geschwenkter Greifeinrichtung bzw. Betätigungseinrichtung
- FIG 5: eine Ausführungsform mit zwei nebeneinander angeordneten elastischen Elementen in einem Schnitt und
- FIG 6: eine Ausführungsform mit zwei übereinander angeordneten elastischen Elementen in einem Schnitt
jeweils schematisch dargestellt sind. Einander entsprechende Größen und Teile sind in den FIG 1 bis 4 mit entsprechenden Bezugszeichen versehen.

Es sind ein Handhabungsgerät (oder: Manipulator, Roboter) mit 2, eine Greifeinrichtung (oder: Greifzange) mit 3, eine Trägerwelle (oder: Übertragungswelle) mit 4, eine Stützeinrichtung (oder: Starrstellungseinrichtung) mit 5, ein Trageteil mit 6, ein flexibles Element mit 7, ein Rotationsantrieb mit 8, ein Gelenk mit 9, ein Werkstück mit 10, eine Betätigungseinrichtung zum Öffnen und Schließen der Greifeinrichtung 3 mit 11, ein unteres Werkzeug (oder: Gesenk) eines Schmiedehammers mit 12, ein oberes Werkzeug des Schmiedehammers mit 13 und eine Transporteinrichtung mit 16 bezeichnet.

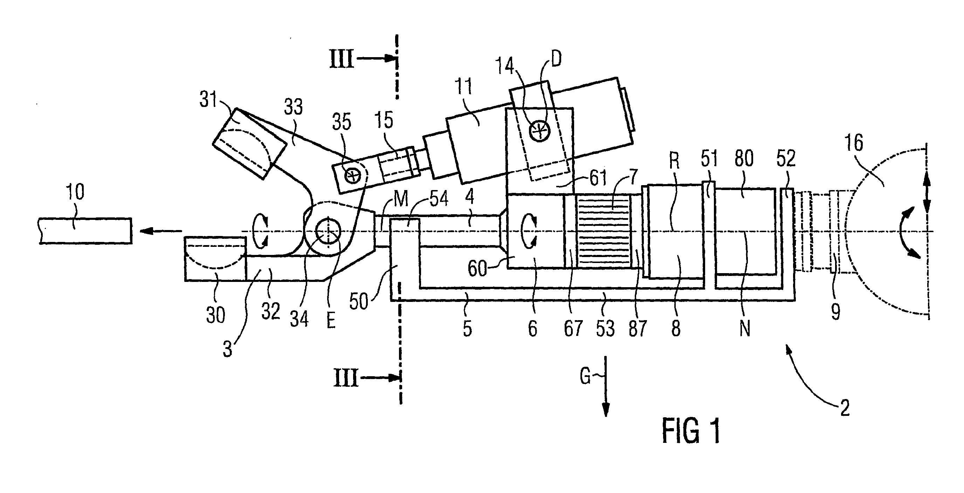

Die Greifeinrichtung 3 umfasst zwei Greifhebel (oder: Zangenhebel) 32 und 33, die zueinander um eine Schwenkachse E in einem Schwenklager 34 schwenkbar sind zum Öffnen und Schließen der Greifeinrichtung 3. An jedem der Greifhebel 32 und 33 ist eine zugehörige Greifbacke (oder: Greifelement, Zangenbacke) 30 bzw. 31 angeordnet. Die FIG 1 zeigt die Greifeinrichtung 3 in geöffnetem Zustand, in dem die Greifeinrichtung 3 mit voneinander weit beabstandeten Greifbacken 30 und 31 von der Transporteinrichtung 16 auf ein Werkstück 10 in Richtung des dargestellten Pfeils zubewegt wird.

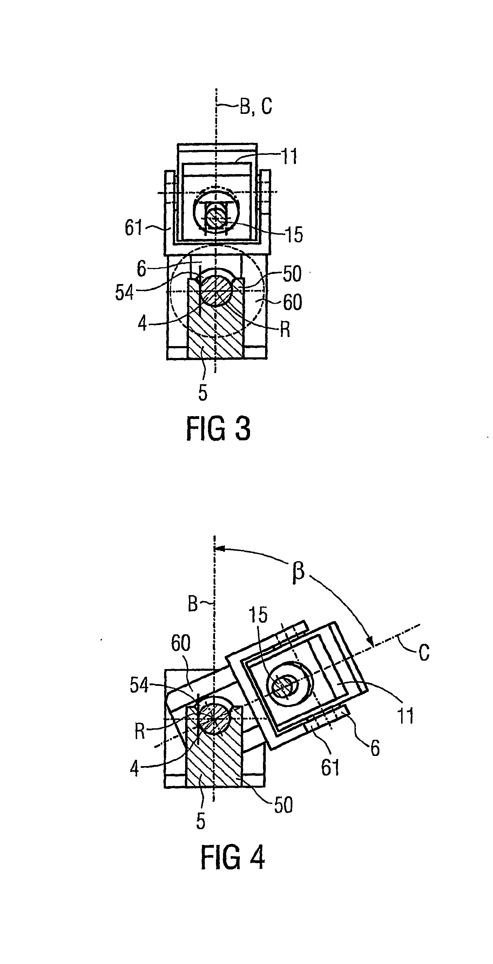

Zum Verschwenken des Greifhebels 33 gegenüber dem Greifhebel 32 ist eine Betätigungseinrichtung 11 vorgesehen, die in einem Angreiflager 35 am Greifhebel 33 angreift und, beispielsweise mittels eines Hubzylinders oder anderen Antriebs, den Greifhebel 33 um das Schwenklager 34 rotiert. Die Betätigungseinrichtung 11 ist in einem Schwenklager 14 um eine Schwenkachse D schwenkbar an einem im Querschnitt (FIG 3 und 4) U-förmigen Halteteil 61 des Trageteils 6 gelagert, um, in Zusammenwirkung mit der Bewegung im Angreiflager 35 bei Verkürzung oder Verlängerung des Hubzylinders der Betätigungseinrichtung 11, das Öffnen oder Schließen der Greifeinrichtung 3 durch Bewegen des Greifhebels 33 zu ermöglichen.

Das Trageteil 6 umfasst ferner ein Zwischenteil 60, auf dem das Halteteil 61 montiert ist und das über die Trägerwelle 4 mit dem Greifhebel 32 der Greifeinrichtung 3 verbunden ist. Der Greifhebel 32, die Trägerwelle 4 und das Zwischenteil 60 sind entlang einer Achse M hintereinander (oder: koaxial) angeordnet und starr oder ortsfest zueinander, jedoch um die Achse M drehbar, miteinander verbunden und bilden zusammen mit dem Halteteil 61 und der Betätigungseinrichtung 11 eine vordere Einheit des Handhabungsgerätes 2. Die Trägerwelle 4 sowie das Trageteil 6 mit dem Zwischenteil 60 und dem Halteteil 61 bilden zusammen eine Trägereinrichtung für die Greifeinrichtung 3 und deren Betätigungseinrichtung 11.

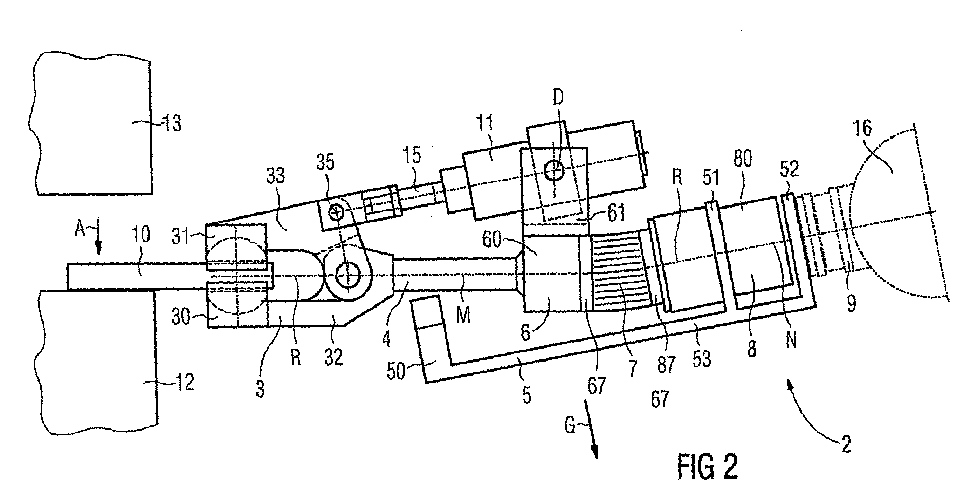

An der von der Trägerwelle 4 abgewandten Seite des Zwischenteils 60 des Trageteils 6 ist das flexible Element 7 befestigt, das wiederum an der anderen Seite mit dem Schwenkantrieb (oder: Rotationsantrieb) 8 verbunden ist. Zur Verbindung des flexiblen Elements 7 mit dem Zwischenteil 60 und dem Schwenkantrieb 8 ist jeweils ein Flansch 67 bzw. 87 vorgesehen. Das flexible Element 7 besteht in FIG 1 und 2 aus einem elastischem Material, vorzugsweise einem Elastomer, und ist zumindest weitgehend massiv ausgebildet. Der Schwenkantrieb 8 ist mit dem Gelenk 9 auf der vom flexiblen Element 7 abgewandten Seite starr oder ortsfest verbunden.

Der Schwenkantrieb 8 und das Gelenk 9 sind entlang einer zweiten Achse N, vorzugsweise konzentrisch zu dieser Achse N, angeordnet und bilden eine hintere Einheit des Handhabungsgerätes 2. In dem flexiblen Element 7 sind nun die vordere Einheit des Handhabungsgerätes 2, nämlich die Greifeinrichtung 3, die Trägerwelle 4 und das Trageteil 6 sowie die Betätigungseinrichtung 11, einerseits und die hintere Einheit des Handhabungsgerätes 2, nämlich der Schwenkantrieb 8 und das Gelenk 9 sowie die Transporteinrichtung 16, zueinander verschwenkbar. Die Achse M der vorderen Einheit und N der hinteren Einheit sind also durch Verformung des flexiblen Elements 7 gegeneinander neigbar oder verdrehbar. FIG 1 zeigt die beiden Einheiten diesseits und jenseits des flexiblen Elements 7 in einer Stellung, in der die beiden Achsen M und N zusammenfallen oder koaxial verlaufen, während in FIG 2 eine Stellung gezeigt ist, bei der Achse N um einen Winkel α nach oben gegenüber der Achse M verschwenkt ist. In FIG 1 sind die Achsen M und N im Wesentlichen horizontal, d.h. senkrecht zur Schwerkraft G angeordnet. Die Achsen M und N können aber auch unter einer Neigung zur Schwerkraft G angeordnet sein. Während in FIG 1 das flexible Element 7 in einem im Wesentlichen unverformten geraden Zustand ist, ist es in FIG 2 durch die veränderte Stellung der Achsen M und N zueinander in einem um den Winkel α nach oben verformten oder gebogenen Zustand.

Die Stützeinrichtung 5 ist stangenartig oder nach Art eines Gestänges ausgebildet und umfasst eine längsverlaufende Verbindungsstange 53, an der ein quer nach oben verlaufendes erstes Befestigungsteil 51 zum Verbinden der Verbindungsstange 53 mit dem Schwenkantrieb 8 und weiter hinten ein quer nach oben verlaufendes zweites Befestigungsteil 52 zur Verbindung der Verbindungsstange 53 mit dem Gelenk 9 sowie im vorderen Bereich ein quer zur Verbindungsstange 53 nach oben ragendes Fixierteil oder Stützteil 50 zum Fixieren oder Stützen der Trägerwelle 4 angeordnet sind. Das Stützteil 50 weist einen konvexen Einschnitt als an die Trägerwelle 4 angepasstes Stützlager (oder: ein Wellensitz) 54 auf, in das die Trägerwelle 4 einlegbar oder eingelegt ist.

Im in FIG 1 gezeigten Zustand, in dem die Achsen M und N koaxial zueinander verlaufen, verläuft nun die Verbindungsstange 53 parallel zu diesen Achsen M und N und das Stützteil 50 stützt die Trägerwelle 4 und damit die mit ihr verbundene Greifeinrichtung 3 in seinem Stützlager 54 ab. Dadurch ist eine gestützte oder starre Verbindung zwischen der vorderen Einheit des Handhabungsgeräts 2 einerseits und der hinteren Einheit des Handhabungsgeräts 2 hergestellt, die das flexible Element 7 überbrückt. Die Stützeinrichtung 5 stellt also quasi eine mechanische Überbrückung oder einen mechanischen Bypass über das flexible Element 7 dar, und beseitigt somit in der Stellung gemäß FIG 1 die Flexibilität des Handhabungsgerätes 2 in dem flexiblen Element 7 zumindest in der Raumrichtung der Schwerkraft G und in den nach unten gerichteten seitlichen Richtungen zwischen der Schwerkraft G und der horizontalen Richtung. Prinzipiell wäre die Greifeinrichtung 3 natürlich noch nach oben biegbar, da der Lagersitz durch das Stützlager 54 die Trägerwelle 4 nur nach unten abstützt. Jedoch wird die starre Verbindung allein durch die Schwerkraft G oder das Eigengewicht der Teile des Handhabungsgerätes 2 aufrechterhalten.

Über einen Verbindungsflansch 67 ist das Zwischenteil 60 des Trageteils 6 drehfest mit dem flexiblen Element 7 verbunden. Auf der abgewandten Seite ist das flexible Element 7 drehfest mit einem Antriebsflansch 87 des Rotationsantriebs 8 verbunden. Der Antriebsflansch 87 ist mit einer Abtriebswelle eines in dem Antriebsgehäuses 80 des Rotationsantriebs 8 angeordneten Antriebsmotors verbunden und relativ zum Antriebsgehäuse 80 um die Rotationsachse R des Rotationsantriebs 8 drehbar.

Die Drehbewegung über den Rotationsantrieb 8 kann dabei auf einen bestimmten Winkelbereich eingeschränkt sein oder auch über die vollen 360° und über mehrere Umdrehungen oder Umläufe durchführbar sein. Die Drehung erfolgt vorzugsweise, beispielsweise mittels eines Servomotors, stufenlos oder auch, beispielsweise mittels eines Schrittmotors, in kleinen Schritten. Die Genauigkeit beträgt dabei wenigstens 1°, in der Regel wenigstens 0,1°.

Eine Drehbewegung des Rotationsantriebs 8 überträgt sich über den Antriebsflansch 87 auf das flexible Element 7, dass die Drehbewegung oder der Drehmoment auf den Verbindungsflansch 67 überträgt. Das Material und die Ausbildung des flexiblen Elements 7 müssen deshalb so gestaltet sein, dass eine Drehmomentübertragung möglich ist. Das Elastizitätsmodul des Elastomers darf deshalb nicht zu hoch gewählt werden und eine vergleichsweise massive Ausbildung ist vorteilhaft.

Das mit dem Verbindungsflansch 65 verbundene Trageteil 6 dreht sich nun zusammen mit der im Halteteil 61 gehaltenen Betätigungseinrichtung 11 mit.

Die Drehbewegung überträgt sich ferner über die Trägerwelle 4 auf die gesamte Greifeinrichtung 3.

FIG 3 und 4 zeigen in einer geschnittenen Ansicht durch den Hubzylinder der Betätigungseinrichtung 11 und die Trägerwelle 4 sowie die Stützeinrichtung 50 gemäß FIG 1 ein Ausführungsbeispiel für eine Schwenkbewegung.

FIG 3 zeigt die Ausgangsstellung, bei der eine Mittelachse B des Stützteils 50 der Stützeinrichtung 5 und eine Mittelachse C der Betätigungseinrichtung 11 sowie des Trageteils 6 zusammenfallen, die Betätigungseinrichtung 11 also in Richtung der Schwerkraft G gesehen oberhalb des Zwischenteils 60 des Trageteils 6 angeordnet ist.

In FIG 4 ist nun die vordere Einheit des Handhabungsgerätes 2 um einen Schwenkwinkel β nach rechts im Uhrzeigersinn verschwenkt oder gedreht. Die Trägerwelle 4 rotiert dabei um die Rotationsachse R in ihrem Stützlager 54 der Stützeinrichtung 5. Die Mittelachse C der vorderen Einheit, insbesondere des Trageteils 6 und der Betätigungseinrichtung 11 ist nun um den Schwenkwinkel β gegenüber der Mittelachse B der Stützeinrichtung 5 verschwenkt. Ebenso ist die Greifeinrichtung 3 gegenüber der ursprünglichen Mittelachse B um den selben Schwenkwinkel β verschwenkt, d.h. die Öffnungs- und Schließbewegung der beiden Greifhebel 32 und 33 erfolgt entlang der Mittelachse C und damit geschwenkt gegenüber der ursprünglichen Mittelachse B. Damit lässt sich ein Werkstück 10 um den entsprechenden Schwenkwinkel β drehen.

In einer nicht dargestellten Ausführungsform ist es auch möglich, das Stützlager 54 geschlossen, beispielsweise langloch- oder O-förmig auszubilden und dadurch ein Herausfallen der Trägerwelle 4 sowie ein Drehen um 360° zu ermöglichen. Insbesondere kann auch eine Verrastung oder Verriegelung vorgesehen sein, die automatisch auslösbar ist. Außerdem kann die Stützeinrichtung 5 auch in allen Ausführungen, insbesondere motorisch, pneumatisch oder hydraulisch, angetrieben werden, also unabhängig von der Schwerkraft G steuerbar sein.

Anstelle eines einzigen massiven flexiblen Elements 7 wie in FIG 1 und 2 ist es auch möglich, mehrere flexible Elemente parallel zueinander und/oder in Reihe zu schalten. Dadurch kann die Flexibilität feiner eingestellt werden und insbesondere eine in verschiedenen Raumrichtungen unterschiedliche Flexibilität leichter eingestellt werden.

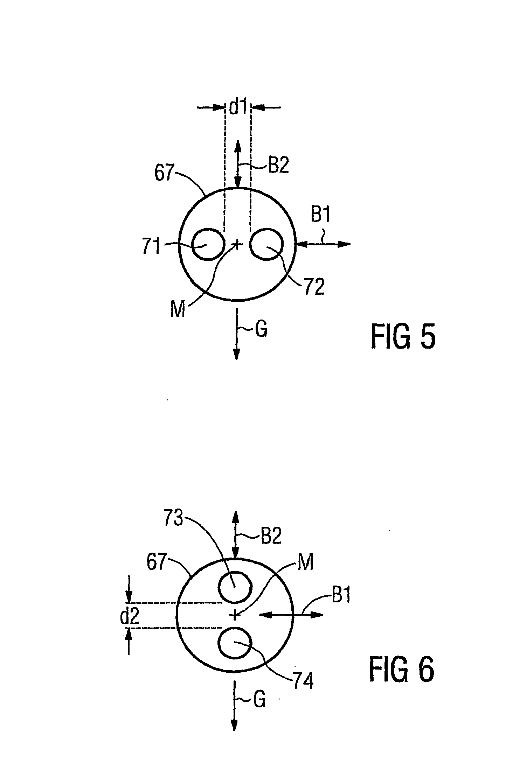

In den FIG 5 und 6 sind zwei Ausführungsbeispiele gezeigt, bei denen jeweils zwei flexible Elemente vorgesehen sind.

In FIG 5 sind zwei im Wesentlichen horizontal, das heißt in einer Richtung oder Ebene senkrecht zur Schwerkraft G, angeordnete flexible Elemente 71 und 72 unter einem Abstand d1 links und rechts von der Drehachse M angeordnet.

In FIG 6 sind dagegen zwei flexible Elemente 73 und 74 in einer Richtung oder Ebene parallel zur Schwerkraft G übereinander angeordnet, und zwar oberhalb und unterhalb der Drehachse M. Der Abstand zwischen den flexiblem Elementen 73 und 74 ist mit d2 bezeichnet. Die flexiblen Elemente 71 bis 74 in den FIG 5 bis 6 sind mit einem zylindrischen Querschnitt gezeichnet, können aber auch andere Querschnitte und Gestaltungen aufweisen.

Über die Abstände d1 und d2 sowie auch die Ausgestaltung und Materialwahl der flexiblen Elemente 71 bis 74 lässt sich die einer Biegung entgegenwirkende Kraft oder das entgegenwirkende Drehmoment in weiten Bereichen einstellen. In FIG 5 und 6 ist eine Biegerichtung B1 in einer Horizontalen und eine Biegerichtung B2 in einer Vertikalen jeweils bezogen auf die Schwerkraft G eingezeichnet.

In dem Ausführungsbeispiel oder der Drehstellung gemäß FIG 5 ist eine Biegung in der Biegerichtung B2 leichter möglich als in der Biegerichtung B1, das von den flexiblen Elementen 71 und 72 aufgebrachte entgegengerichtete Drehmoment also in der Biegerichtung B2 kleiner als in der Biegerichtung B1. Die Anordnung der Elemente 71 und 72 gemäß FIG 5 wird vorzugsweise für die Grundstellung, also ohne Drehung, des Handhabungsgerätes vorgesehen.

In der Ausführungsform oder Drehstellung gemäß FIG 6 mit übereinander angeordneten flexiblen Elementen 73 und 74 ist dagegen die Biegung in der Biegerichtung B1 einfacher als in der Biegerichtung B2. Die Stellung gemäß FIG 6 geht aus der Stellung gemäß FIG 5 beispielsweise durch Drehung um 90° hervor.

Es sind anstelle von zwei flexiblen Elementen auch Anordnungen beliebig vieler flexibler Elemente möglich, die je nach Anwendungsfall optimiert werden können.

Vorteilhaft ist zum Beispiel die Verwendung eines zylindrischen massiven oder mit Höhlungen versehenen Körpers aus einem elastischen Polymerwerkstoff, beispielsweise einem vulkanisierten Naturkautschuk oder auch einem anderen Elastomer, an dessen Stirnseiten jeweils eine zylindrische Platte aus Metall, beispielsweise Stahl, angeordnet ist als flexibles Element 7 oder 71 bis 74. Die Verbindung des entsprechend ausgestalteten flexiblen Elementes 7 oder 71, 72, 73, 74 aus den beiden Stirnplatten und dem Polymerkörper erfolgt vorzugsweise über Schraubverbindungen, kann aber auch über feste Verbindungen wie Schweißen erfolgen. Die Länge, gemessen entlang der Zylinderachse, des flexiblen Elementes 7 bzw. 71 bis 74 ist in der Regel größer als sein Durchmesser. Die Radialelastizität ist in der Regel höher als die Axialelastizität. Der Elastomerkörper ist sowohl hinsichtlich einer axialen Druckbeanspruchung als auch einer radialen Schubbeanspruchung und auch einer kombinierten Druck- und Schubbeanspruchung jeweils abhängig von dem Einbau belastbar. Die Form des Elastomerkörpers kann natürlich von der Zylinderform abweichen und beispielsweise auch in der Mitte verjüngt sein.

Die Funktion des Drehens der Greifeinrichtung 3 beim Handhaben des Werkstücks 10 soll im Folgenden noch näher erläutert werden.

In FIG 1 wird das Werkstück 10 gerade von der Greifeinrichtung 3 von einem Förderband oder einem anderen, insbesondere stationären Werkstückvorrat erfasst. Die Greifeinrichtung 3 steht in dieser Stellung in ihrer vertikalen Ausgangsstellung, d.h. die Mittelachsen B und C gemäß FIG 3 fallen zusammen. Nun wird das Werkstück in der Greifeinrichtung 3 gehalten und mittels der Transporteinrichtung 16, zu der Umformmaschine transportiert und dort in die Umformposition zum Umformen gebracht. Dabei wird über die Stützeinrichtung 5 das Handhabungsgerät 2 im starren Zustand gehalten.

FIG 2 zeigt das Werkstück 10 im aufgelegten Zustand auf dem unteren Gesenk 12 eines Schmiedehammers. Durch Anheben der hinteren Einheit des Handhabungsgerätes 2, also Neigen der Mittelachse N von Rotationsantrieb 8 und Gelenk 9 um den Neigungswinkel α gegenüber der Mittelachse M der vorderen Einheit des Handhabungsgerätes 2 um das flexible Element 7, wird die Stützeinrichtung 5 aus dem Eingriff mit der Trägerwelle 4 gebracht, da die Stützeinrichtung 5 mit dem Rotationsantrieb 8 und dem Gelenk 9 entlang deren Achse N ausgerichtet bleibt und damit das Stützteil 50 sich ausreichend von der Trägerwelle 4 entfernt. Bei der Neigungsbewegung um den Winkel α dient dabei das Gesenk 12 über das Werkstück 10 als Widerlager.

Nun schlägt der Schlagbär oder Hammer mit dem oberen Werkzeug 13 des Schmiedehammers in der Schlagrichtung A auf das Werkstück 10. Bei der Schlagbewegung entstehen erhebliche Stoß- und Vibrationsbelastungen, die über das Werkstück 10 auf die Greifeinrichtung 3 und das gesamte Handhabungsgerät 2 übertragen werden. Das elastische Element 7 entkoppelt nun jedoch diese Stöße oder Vibration weitgehend von der Transporteinrichtung 16 und dem Rotationsantrieb 8, so dass diese Antriebsvorrichtungen vor Überlastung geschützt werden. FIG 2 zeigt die Greifeinrichtung 3 beim Schmiedevorgang in der vertikalen Stellung.

Abhängig vom Werkstück 10 und dem gewünschten Umformvorgang kann es jedoch in vielen Umformprozessen erforderlich sein, das Werkstück 10 vor dem Auflegen auf das Gesenk 12 zu drehen, insbesondere um eine durch das Werkstück 10 verlaufende Achse, beispielsweise seine Längsachse. Dazu wird das Werkstück 10 von der Greifeinrichtung 3 ergriffen und im gestützten Zustand, d.h. bei im Eingriff in die Trägerwelle 4 befindlicher Stützeinrichtung 5, wird die Greifeinrichtung 3 mit dem ergriffenen Werkstück 10 um den gewünschten Schwenkwinkel β gedreht. Sodann wird das gedrehte oder geschwenkte Werkstück 10 wieder auf ein Gesenk oder einen anderen Gesenkbereich des Gesenks 12 aufgelegt und erneut mit dem oberen Werkzeug 13 oder einem anderen Werkzeug umgeformt. Solche zwei- oder mehrstufigen Umformprozesse treten beispielsweise beim Biegen eines Werkstücks zur Materialvorverteilung in einem ersten Schmiedevorgang oder Schmiedeschritt und beim anschließenden Flachformen oder Schmieden (Querschnittsänderung) auf.

### Bezugszeichenliste

- 2: Handhabungsgerät
- 3: Greifeinrichtung
- 4: Trägerwelle
- 5: Stützeinrichtung
- 6: Trageteil
- 7: flexibles Element
- 8: Rotationsantrieb
- 9: Gelenk
- 10: Werkstück
- 11: Betätigungsvorrichtung
- 12: Gesenk
- 13: Schlagbär
- 14: Schwenklager
- 15: Hubzylinder
- 16: Transporteinrichtung
- 30, 31: Greifbacke
- 32, 33: Greifhebel
- 34: Schwenklager
- 35: Angreiflager
- 50: Stützteil
- 51, 52: Befestigungsteil
- 53: Verbindungsstange
- 54: Stützlager
- 60: Zwischenteil
- 61: Halteteil
- 65: Verbindungsflansch
- 71, 72: flexibles Element
- 73, 74: flexibles Element
- 80: Antriebsgehäuse
- 87: Antriebsflansch
- M: vordere Achse
- N: hintere Achse
- A: Schlagrichtung
- B, C: Achse
- D, E: Schwenkachse
- F: Schwenkachse
- G: Schwerkraft
- R: Rotationsachse
- d1, d2: Abstand
- B1, B2: Biegerichtung

## Patentansprüche

1. Handhabungsgerät zum Handhaben eines Werkstücks während eines Umformprozesses, insbesondere eines Schmiedevorgangs, umfassend
a) wenigstens eine Greifeinrichtung (3) mit wenigstens zwei relativ zueinander bewegbaren Greifelementen (30, 31) zum Greifen des Werkstücks (10),
b) wenigstens eine Transporteinrichtung (16) zum Transportieren der Greifeinrichtung oder zum Transportieren wenigstens einer Trägereinrichtung (4), an der die Greifeinrichtung befestigt oder befestigbar ist,
c) wenigstens einen Rotationsantrieb (8) zum Drehen der Greifeinrichtung um eine durch die Greifeinrichtung verlaufende Drehachse,
d) wobei die Greifeinrichtung oder die wenigstens eine Trägereinrichtung, an der die Greifeinrichtung befestigt oder befestigbar ist, einerseits und die Transporteinrichtung andererseits in einem flexiblen Zustand miteinander flexibel verbunden sind und in einem starren Zustand, zumindest in einer Raumrichtung und/oder in jeder Drehstellung der Greifeinrichtung, im Wesentlichen miteinander starr verbunden sind oder zueinander starr gestellt sind,
e) wobei die Greifeinrichtung oder die Trägereinrichtung einerseits und die Transporteinrichtung andererseits über wenigstens ein flexibles Element (7, 71 bis 74) miteinander verbunden sind und in dem flexiblen Zustand nur über das flexible Element verbunden sind und in dem starren Zustand über wenigstens eine Stützeinrichtung unter Überbrückung des flexiblen Elements im Wesentlichen aneinander oder gegeneinander abgestützt sind, **dadurch gekennzeichnet, dass**:
f) die Greifeinrichtung und/oder die Trägereinrichtung im gestützten Zustand in einem Stützlager der Stützeinrichtung abgestützt sind oder ist und
g) das Stützlager der Stützeinrichtung ein Drehlager für die Greifeinrichtung und/oder die Trägereinrichtung bildet, in dem die Greifeinrichtung und/oder die Trägereinrichtung beim Drehen der Greifeinrichtung sich dreht oder drehbar ist.

2. Handhabungsgerät nach Anspruch 1, bei dem wenigstens ein Rotationsantrieb zum Drehen der Greifeinrichtung auf der von der Greifeinrichtung und/oder der Trägereinrichtung abgewandten Seite des flexiblen Elements, insbesondere zwischen dem flexiblen Element und der Transporteinrichtung, angeordnet ist.

3. Handhabungsgerät nach Anspruch 2, bei dem das flexible Element das Drehmoment des Rotationsantriebs zum Drehen der Greifeinrichtung überträgt und/oder eine Abtriebswelle des Antriebsmotors über einen Flansch mit dem flexiblen Element oder Verbindungselement drehfest verbunden ist.

4. Handhabungsgerät nach Anspruch 1, bei dem der Rotationsantrieb zum Drehen der Greifeinrichtung auf der von der Transporteinrichtung abgewandten Seite des flexiblen Elements angeordnet ist.

5. Handhabungsgerät nach einem der vorhergehenden Ansprüche, bei dem die Trägereinrichtung mit der Greifeinrichtung beim Drehen der Greifeinrichtung mitrotiert.

6. Handhabungsgerät nach einem der vorhergehenden Ansprüche, bei dem das Stützlager eine im wesentlichen zylindrische Innenfläche aufweist und die Greifeinrichtung und/oder die Trägereinrichtung zumindest in dem in das Stützlager eingreifenden Außenbereich eine zylindrische Außenfläche aufweist.

7. Handhabungsgerät nach einem der vorhergehenden Ansprüche, bei dem die Trägereinrichtung eine Trägerwelle aufweist, die im Stützlager abstützbar ist.

8. Handhabungsgerät nach einem der vorhergehenden Ansprüche, bei dem die Greifeinrichtung eine Betätigungseinrichtung zum Bewegen der Greifelemente zueinander aufweist und bei dem die Trägereinrichtung ein Trageteil aufweist, in dem die Betätigungseinrichtung gelagert ist.

9. Handhabungsgerät nach Anspruch 8 und Anspruch 7, bei dem das Trageteil der Trägereinrichtung zwischen der Trägerwelle und dem flexiblem Element angeordnet ist.

10. Handhabungsgerät nach Anspruch 8 oder Anspruch 9, bei dem die Greifeinrichtung wenigstens zwei in einem Schwenklager zueinander verschwenkbare Greifhebel aufweist, von denen jeder wenigstens ein Greifelement trägt, wobei vorzugsweise einer der beiden Greifhebel unmittelbar mit der Trägereinrichtung verbunden ist und der andere Greifhebel mit der Betätigungseinrichtung gekoppelt ist und von dieser gegenüber dem ersten Greifhebel in dem Schwenklager schwenkbar ist.

11. Handhabungsgerät nach einem der vorhergehenden Ansprüche, bei dem die Stützeinrichtung an der Transporteinrichtung oder am Antriebsgehäuse des Rotationsantriebs befestigt ist.

12. Handhabungsgerät nach einem der vorhergehenden Ansprüche mit wenigstens einem Rotationsantrieb zum Drehen wenigstens eines der Greifelemente um eine durch das Greifelement verlaufende Drehachse oder der beiden Greifelemente der Greifeinrichtung um jeweils eine zugehörige Drehachse.

13. Handhabungsgerät nach einem der vorhergehenden Ansprüche, bei dem wenigstens eines der Greifelemente der Greifeinrichtung in einem zugehörigen Drehlager um jeweils eine zugehörige Drehachse drehbar gelagert ist.

14. Handhabungsgerät nach einem der vorhergehenden Ansprüche, bei dem die Drehbewegung des oder der Greifelemente(s) auf einen vorgegebenen Winkelbereich beschränkt ist, der vorzugsweise wenigstens 90°, insbesondere wenigstens 180° oder wenigstens 360°, beträgt oder bei dem die Drehbewegung des oder der Greifelemente(s) wenigstens einen oder mehrere volle Umläufe um die jeweilige Drehachse umfasst oder bei dem bei der Drehbewegung das oder die Greifelement(e) in einer Vielzahl von Drehstellungen oder jeder Drehstellung einstellbar ist bzw. sind.

15. Handhabungsgerät nach einem der vorhergehenden Ansprüche, bei dem die Drehbewegung der Greifeinrichtung auf einen vorgegebenen Winkelbereich beschränkt ist, der vorzugsweise wenigstens 90°, insbesondere wenigstens 180° oder wenigstens 360°, beträgt.

16. Handhabungsgerät nach einem der Ansprüche 1 bis 14, bei dem die Drehbewegung der Greifeinrichtung wenigstens einen oder mehrere volle Umläufe um die jeweilige Drehachse umfasst.

17. Handhabungsgerät nach einem der vorhergehenden Ansprüche, bei dem bei der Drehbewegung die Greifeinrichtung in einer Vielzahl von Drehstellungen oder jeder Drehstellung einstellbar ist bzw. sind und/oder bei der der oder jeder Rotationsantrieb stufenlos oder in kleinen Schritten steuerbar oder regelbar ist.

18. Handhabungsgerät nach einem der vorangegangenen Ansprüche, bei dem wenigstens eine Verriegelungseinrichtung vorgesehen ist, die in dem starren Zustand die wenigstens eine Stützeinrichtung mit der Greifeinrichtung oder der Trägereinrichtung und/oder der Transporteinrichtung verriegelt und in dem flexiblen Zustand nicht verriegelt.

19. Handhabungsgerät nach Anspruch 18, bei dem die Verriegelungseinrichtung am Stützlager der Stützeinrichtung vorgesehen ist und vorzugsweise zusammen mit dem Stützlager die Greifeinrichtung oder die Trägereinrichtung in dem entsprechenden Bereich umgibt oder umschließt, so dass ein Herausfallen der Greifeinrichtung und/oder der Trägereinrichtung in jeder Drehstellung verhindert ist.

20. Handhabungsgerät nach einem der vorhergehenden Ansprüche, bei dem der Rotationsantrieb wenigstens einen elektrischen Antriebsmotor, insbesondere einen Servomotor, und/oder wenigstens einen hydraulischen Antrieb und/oder wenigstens einen pneumatischen Antrieb umfasst.

21. Verfahren zum Umformen eines Werkstücks in einer Umformmaschine, insbesondere einem Schmiedehammer oder einer Spindelpresse, bei dem das Werkstück von wenigstens einem Handhabungsgerät nach einem der Ansprüche 1 bis 20 gehandhabt wird.

22. Verfahren nach Anspruch 21, bei dem
a) ein Werkstück bereitgestellt wird,
b) das Werkstück von wenigstens einem Handhabungsgerät nach einem oder mehreren der Ansprüche 1 bis 20 ergriffen wird, zu einer Umformmaschine transportiert wird und dort in eine vorgegebene Umformposition gebracht wird,
c) das Werkstück in wenigstens einem Umformschritt mittels der Umformmaschine umgeformt wird,
d) wobei das Werkstück von dem Handhabungsgerät durch Drehen von dessen Greifeinrichtung und/oder dessen Greifelement(en) vor oder nach einem Umformschritt oder zwischen zwei Umformschritten gedreht oder geschwenkt wird, insbesondere um einen Schwenkwinkel in einem vorgegebenen Winkelbereich von wenigstens 90°, insbesondere wenigstens 180° oder wenigstens 360°, und/oder um einen beliebigen Schwenkwinkel.

23. Verfahren nach Anspruch 21 oder Anspruch 22, bei dem das Werkstück während des Umformens oder des Umformschritts von dem wenigstens einen Handhabungsgerät oder vorzugsweise von wenigstens zwei Handhabungsgeräten an verschiedenen Enden festgehalten wird.

24. Verfahren nach einem der Ansprüche 21 bis 23, bei dem das umgeformte Werkstück von dem wenigstens ein Handhabungsgerät zu einer Werkstückablage transportiert wird.

## Claims

1. Handling device for handling a workpiece during a shaping process, in particular a forging process, comprising:
a) at least one gripping device (3) having at least two gripping elements (30, 31) that can move relative to one another for grasping the workpiece (10),
b) at least one transporting device (16) for transporting the gripping device or for transporting at least one carrier device (4), to which the gripping device is fastened or can be fastened,
c) at least one rotary drive (8) for rotating the gripping device about an axis of rotation that extends through the gripping device,
d) the gripping device or the at least one carrier device, to which the gripping device is fastened or can be fastened, on the one hand and the transporting device on the other hand being flexibly connected to one another in a flexible state and being substantially rigidly connected to one another, or rigidly positioned in relation to one another, at least in one spatial direction and/or in every rotational position of the gripping device, in a rigid state,
e) the gripping device or the carrier device on the one hand and the transporting device on the other hand being connected to one another by way of at least one flexible element (7, 71 to 74) and in the flexible state only being connected by way of the flexible element and in the rigid state being supported by way of at least one supporting device substantially on one another or against one another while bridging the flexible element, **characterized in that**:
f) the gripping device and/or the carrier device in the supported state are or is supported in a supporting bearing of the supporting device and
g) the supporting bearing of the supporting device forms a rotary bearing for the gripping device and/or the carrier device, in which the gripping device and/or the carrier device rotates or is rotatable when the gripping device rotates.

2. Handling device according to Claim 1, in which at least one rotary drive for rotating the gripping device is arranged on the side of the flexible element that is facing away from the gripping device and/or the carrier device, in particular between the flexible element and the transporting device.

3. Handling device according to Claim 2, in which the flexible element transmits the torque of the rotary drive for rotating the gripping device and/or an output shaft of the drive motor is connected to the flexible element or connecting element for rotation therewith by way of a flange.

4. Handling device according to Claim 1, in which the rotary drive for rotating the gripping device is arranged on the side of the flexible element that is facing away from the transporting device.

5. Handling device according to one of the preceding claims, in which the carrier device rotates along with the gripping device when the gripping device rotates.

6. Handling device according to one of the preceding claims, in which the supporting bearing has a substantially cylindrical inner surface and the gripping device and/or the carrier device has a cylindrical outer surface, at least in the outer region engaging in the supporting bearing.

7. Handling device according to one of the preceding claims, in which the carrier device has a carrier shaft, which can be supported in the supporting bearing.

8. Handling device according to one of the preceding claims, in which the gripping device has an actuating device for moving the gripping elements in relation to one another and in which the carrier device has a carrying part, in which the actuating device is mounted.

9. Handling device according to Claim 8 and Claim 7, in which the carrying part of the carrier device is arranged between the carrier shaft and the flexible element.

10. Handling device according to Claim 8 or Claim 9, in which the gripping device has at least two gripping levers, which can be pivoted in relation to one another in a pivot bearing and each of which carries at least one gripping element, preferably one of the two gripping levers being connected directly to the carrier device and the other gripping lever being coupled with the actuating device and pivotable by the latter with respect to the first gripping lever in the pivot bearing.

11. Handling device according to one of the preceding claims, in which the supporting device is fastened to the transporting device or to the drive housing of the rotary drive.

12. Handling device according to one of the preceding claims having at least one rotary drive for rotating at least one of the gripping elements about an axis of rotation extending through the gripping element or the two gripping elements of the gripping device about an associated axis of rotation in each case.

13. Handling device according to one of the preceding claims, in which at least one of the gripping elements of the gripping device is mounted rotatably about an associated axis of rotation in each case in an associated rotary bearing.

14. Handling device according to one of the preceding claims, in which the rotational movement of the gripping element or gripping elements is restricted to a prescribed angular range, which is preferably at least 90°, in particular at least 180° or at least 360°, or in which the rotational movement of the gripping element or gripping elements comprises at least one or more full revolutions about the respective axis of rotation or in which, when the rotational movement takes place, the gripping element or gripping elements can be set in a multiplicity of rotational positions or every rotational position.

15. Handling device according to one of the preceding claims, in which the rotational movement of the gripping device is restricted to a prescribed angular range, which is preferably at least 90°, in particular at least 180° or at least 360°.

16. Handling device according to one of Claims 1 to 14, in which the rotational movement of the gripping device comprises at least one or more full revolutions about the respective axis of rotation.

17. Handling device according to one of the preceding claims, in which, when the rotational movement takes place, the gripping device can be set in a multiplicity of rotational positions or every rotational position and/or in which the or each rotary drive can be controlled in an openloop or closed-loop manner steplessly or in small steps.

18. Handling device according to one of the preceding claims, in which at least one locking device is provided, which interlocks the at least one supporting device with the gripping device or the carrier device and/or the transporting device in the rigid state and does not interlock them in the flexible state.

19. Handling device according to Claim 18, in which the locking device is provided on the supporting bearing of the supporting device and preferably together with the supporting bearing surrounds or encloses the gripping device or the carrier device in the corresponding region, so that the gripping device and/or the carrier device is/are prevented from falling out in every rotational position.

20. Handling device according to one of the preceding claims, in which the rotary drive comprises at least one electric drive motor, in particular a servomotor, and/or at least one hydraulic drive and/or at least one pneumatic drive.

21. Method for shaping a workpiece in a shaping machine, in particular a forging hammer or a spindle press, in which the workpiece is handled by at least one handling device according to one of Claims 1 to 20.

22. Method according to Claim 21, in which
a) a workpiece is provided,
b) the workpiece is grasped by at least one handling device according to one or more of Claims 1 to 20, is transported to a shaping machine and is brought there into a prescribed shaping position,
c) the workpiece is shaped in at least one shaping step by means of the shaping machine,
d) the workpiece being turned or pivoted by the handling device by rotation of its gripping device and/or its gripping element(s) before or after a shaping step or between two shaping steps, in particular by a pivoting angle in a prescribed angular range of at least 90°, in particular at least 180° or at least 360°, and/or by any desired pivoting angle.

23. Method according to Claim 21 or Claim 22, in which the workpiece is securely held during the shaping or the shaping step by the at least one handling device, or preferably by at least two handling devices at different ends.

24. Method according to one of Claims 21 to 23, in which the shaped workpiece is transported by the at least one handling device to a workpiece depository.

## Revendications

1. Manipulateur permettant de manipuler une pièce pendant un processus de formage, en particulier un processus de forgeage, comportant
a) au moins un dispositif de préhension (3) avec au moins deux éléments de préhension (30, 31) mobiles l'un par rapport à l'autre et destinés à saisir la pièce (10),
b) au moins un dispositif de transport (16) pour transporter le dispositif de préhension ou pour transporter au moins un dispositif porteur (4) auquel est fixé ou peut être fixé le dispositif de préhension,
c) au moins un système d'entraînement en rotation (8) pour entraîner en rotation le dispositif de préhension autour d'un axe de rotation traversant le dispositif de préhension,
d) ledit dispositif de préhension ou ledit au moins un dispositif porteur auquel est fixé ou peut être fixé le dispositif de préhension, d'une part, et le dispositif de transport, d'autre part, étant reliés entre eux de manière flexible dans un état flexible et étant reliés entre eux sensiblement de manière rigide ou positionnés de manière rigide l'un par rapport à l'autre dans un état rigide, au moins dans une direction dans l'espace et/ou dans chaque position de rotation du dispositif de préhension,
e) le dispositif de préhension ou le dispositif porteur, d'une part, et le dispositif de transport, d'autre part, étant reliés entre eux par l'intermédiaire d'au moins un élément flexible (7, 71 à 74) et, à l'état flexible, étant reliés uniquement par l'intermédiaire de l'élément flexible, et, à l'état rigide, étant étayés l'un sur l'autre ou l'un contre l'autre par l'intermédiaire d'au moins un dispositif de support sans passer par l'élément flexible,
**caractérisé en ce que**
f) le dispositif de préhension et/ou le dispositif porteur, dans la position étayée, sont soutenus dans un palier support du dispositif de support, et
g) le palier support du dispositif de support forme un palier rotatif pour le dispositif de préhension et/ou le dispositif porteur, dans lequel le dispositif de préhension et/ou le dispositif porteur tournent ou sont aptes à tourner pendant la rotation du dispositif de préhension.

2. Manipulateur selon la revendication 1, dans lequel au moins un système d'entraînement en rotation destiné à faire tourner le dispositif de préhension est disposé l'élément flexible sur son côté opposé au dispositif de préhension et/ou au dispositif porteur, en particulier entre l'élément flexible et le dispositif de transport.

3. Manipulateur selon la revendication 2, dans lequel l'élément flexible transmet le couple de rotation du système d'entraînement en rotation destiné à faire tourner le dispositif de préhension et/ou un arbre de sortie du moteur d'entraînement est relié de manière solidaire en rotation à l'élément flexible ou élément de liaison par l'intermédiaire d'une flasque.

4. Manipulateur selon la revendication 1, dans lequel le système d'entraînement en rotation destiné à faire tourner le dispositif de préhension est disposé sur l'élément flexible, sur son côté opposé au dispositif de transport.

5. Manipulateur selon l'une quelconque des revendications précédentes, dans lequel le dispositif porteur est entraîné en rotation avec le dispositif de préhension pendant la rotation du dispositif de préhension.

6. Manipulateur selon l'une quelconque des revendications précédentes, dans lequel le palier support comporte une face intérieure sensiblement cylindrique et le dispositif de préhension et/ou le dispositif porteur comportent, au moins dans la zone extérieure s'engageant dans le palier support, une face extérieure cylindrique.

7. Manipulateur selon l'une quelconque des revendications précédentes, dans lequel le dispositif porteur comporte un arbre porteur qui peut être supportée dans le palier support.

8. Manipulateur selon l'une quelconque des revendications précédentes, dans lequel le dispositif de préhension comporte un dispositif d'actionnement destiné à actionner les éléments de préhension les uns par rapport aux autres et dans lequel le dispositif porteur comporte une partie porteuse dans laquelle est logé le dispositif d'actionnement.

9. Manipulateur selon la revendication 8 et la revendication 7, dans lequel la partie porteuse du dispositif porteur est disposée entre l'arbre porteur et l'élément flexible.

10. Manipulateur selon la revendication 8 ou la revendication 9, dans lequel le dispositif de préhension comporte au moins deux leviers de préhension, qui peuvent pivoter l'un par rapport à l'autre dans un palier de pivotement et dont chacun porte au moins un élément de préhension, de préférence l'un des deux leviers de préhension étant relié directement au dispositif porteur et l'autre levier de préhension étant couplé au dispositif d'actionnement et étant apte à pivoter au moyen de ce dernier par rapport au premier levier de préhension dans le palier de pivotement.

11. Manipulateur selon l'une quelconque des revendications précédentes, dans lequel le dispositif de support est fixé au dispositif de transport ou au carter du système d'entraînement en rotation.

12. Manipulateur selon l'une quelconque des revendications précédentes, comportant au moins un système d'entraînement en rotation destiné à faire tourner au moins un des éléments de préhension autour d'un axe de rotation traversant l'élément de préhension, ou les deux éléments de préhension du dispositif de préhension chacun autour d'un axe de rotation correspondant.

13. Manipulateur selon l'une quelconque des revendications précédentes, dans lequel au moins un des éléments de préhension du dispositif de préhension est monté dans un palier rotatif correspondant de manière à pouvoir tourner respectivement autour d'un axe de rotation correspondant.

14. Manipulateur selon l'une quelconque des revendications précédentes, dans lequel le mouvement de rotation du ou des éléments de préhension est limité à une zone angulaire définie, qui mesure de préférence au moins 90°, en particulier au moins 180° ou au moins 360°, ou dans lequel le mouvement de rotation du ou des éléments de préhension comprend au moins une ou plusieurs rotations complètes autour de l'axe de rotation respectif, ou dans lequel le ou les éléments de préhension est ou sont réglables dans une pluralité de positions de rotation ou dans chaque position de rotation pendant le mouvement de rotation.

15. Manipulateur selon l'une quelconque des revendications précédentes, dans lequel le mouvement de rotation du dispositif de préhension est limité à une zone angulaire définie, qui mesure de préférence au moins 90°, en particulier au moins 180° ou au moins 360°.

16. Manipulateur selon l'une quelconque des revendications 1 à 14, dans lequel le mouvement de rotation du dispositif de préhension comprend au moins une ou plusieurs rotations complètes autour de l'axe de rotation respectif.

17. Manipulateur selon l'une quelconque des revendications précédentes, dans lequel le dispositif de préhension est réglable dans une pluralité de positions de rotation ou dans chaque position de rotation pendant le mouvement de rotation, et/ou dans lequel le système d'entraînement en rotation ou chaque système d'entraînement en rotation peut être commandé ou réglé en continu ou sur de petits pas.

18. Manipulateur selon l'une quelconque des revendications précédentes, dans lequel est prévu au moins un dispositif de verrouillage qui, à l'état rigide, verrouille ledit au moins un dispositif de support avec le dispositif de préhension ou le dispositif porteur et/ou le dispositif de transport et ne verrouille pas à l'état flexible.

19. Manipulateur selon la revendication 18, dans lequel le dispositif de verrouillage est prévu sur le palier support du dispositif de support et entoure ou enserre, de préférence conjointement avec le palier support, le dispositif de préhension ou le dispositif porteur dans la zone correspondante, de telle sorte que le dispositif de préhension et/ou le dispositif porteur ne peuvent pas se désolidariser quelle que soit la position de rotation.

20. Manipulateur selon l'une quelconque des revendications précédentes, dans lequel le système d'entraînement en rotation comporte au moins un moteur d'entraînement électrique, en particulier un servomoteur, et/ou au moins un entraînement hydraulique et/ou au moins un entraînement pneumatique.

21. Procédé permettant le formage d'une pièce dans une machine de formage, en particulier un marteau-pilon ou une presse à vis, dans lequel procédé la pièce est manipulée par au moins un manipulateur selon l'une quelconque des revendications 1 à 20.

22. Procédé selon la revendication 21, dans lequel
a) une pièce est mise en place,
b) ladite pièce est saisie par au moins un manipulateur selon une ou plusieurs des revendications 1 à 20, est transportée vers une machine de formage, dans laquelle elle est amenée dans une position de formage définie,
c) ladite pièce est formée en au moins une étape de formage au moyen de la machine de formage,
d) ladite pièce étant tournée ou pivotée par le manipulateur sous l'effet de la rotation du dispositif de préhension de celui-ci et/ou des éléments de préhension de celui-ci avant ou après une étape de formage ou entre deux étapes de formage, en particulier selon un angle de pivotement dans une zone angulaire définie d'au moins 90°, en particulier au moins 180° ou au moins 360°, et/ou selon un angle de pivotement quelconque.

23. Procédé selon la revendication 21 ou la revendication 22, dans lequel, pendant le formage ou l'étape de formage, la pièce est maintenue à des extrémités différentes par ledit au moins un manipulateur ou de préférence par au moins deux manipulateurs.

24. Procédé selon l'une quelconque des revendications 21 à 23, dans lequel la pièce formée est transportée par ledit au moins un manipulateur vers un système de réception des pièces.
